**Europäisches Patentamt**

**European Patent Office**

**Office européen des brevets**

(11) Veröffentlichungsnummer: **0 027 945 B1**

(12) **EUROPÄISCHE PATENTSCHRIFT**

(45) Veröffentlichungstag der Patentschrift:
02.05.85

(21) Anmeldenummer: **80106210.0**

(22) Anmeldetag: **11.10.80**

(51) Int. Cl.⁴: **E 04 C 2/26**

(54) **Verbundplatte.**

(30) Priorität: **25.10.79 DE 2943071**
**19.06.80 DE 3022805**

(43) Veröffentlichungstag der Anmeldung:
**06.05.81 Patentblatt 81/18**

(45) Bekanntmachung des Hinweises auf die Patenterteilung:
**02.05.85 Patentblatt 85/18**

(84) Benannte Vertragsstaaten:
**AT BE CH DE FR GB IT LI LU NL SE**

(56) Entgegenhaltungen:
**FR - A - 2 303 136**
**US - A - 3 215 225**
**US - A - 3 467 569**

(73) Patentinhaber: **HOECHST AKTIENGESELLSCHAFT,**
**Postfach 80 03 20, D-6230 Frankfurt am Main 80 (DE)**

(72) Erfinder: **Braunisch, Herbert, Dr., Nelkenweg 8,**
**D-6238 Hofheim am Taunus (DE)**
Erfinder: **Golly, Helmut, Dr., Rotlintallee 3,**
**D-6233 Kelkheim (Taunus) (DE)**

**Beschreibung**

Die Erfindung bezieht sich auf eine aus mindestens drei Schichten bestehende Verbundplatte als Entdröhnungsmaterial.

Es ist bekannt, dass zur Körperschalldämpfung dreischichtige Verbundsysteme eingesetzt werden, die aus zwei durch eine viskoelastische Dämpfungsschicht miteinander verbundenen Platten mit grossem Elastizitätsmodul bestehen (vgl. Acustica 22 (1969/70), Seite 136). Dabei handelt es sich hauptsächlich um Stahlverbundbleche, die als Dämpfungsstoff ein Copolymer auf Vinylacetatbasis enthalten, und die Stahlplatten können gleiche oder verschiedene Dicken haben.

Bekannt sind auch unsymmetrische Verbundsysteme, die aus einem relativ dicken Blech einer Blechkonstruktion und einem Belag aus einer viskoelastischen dämpfenden Schicht mit einer dünnen Metallabdeckfolie bestehen (vgl. Kunststoffe 51 (1961), Seite 495). Diese Beläge lassen sich in einfacher Weise auf Blechkonstruktionen «tapezieren». Die Dämpfungsschicht wird gebildet aus amorphen Hochpolymeren, die Homopolymere wie Polyvinylacetat oder Polyvinylpropionat, Copolymere oder Polymergemische sein können.

Ferner ist bekannt, dass Copolymere aus Vinylacetat, einem Acrylsäureester, Dibutylmaleinat und Crotonsäure sich zur Herstellung von schwingungsdämpfenden Zwischenschichten für Verbundsysteme aus harten Platten, insbesondere Blechen, eignen (vgl. z.B. deutsche Patentschriften 1 694 088 und 1 694 089).

Weiterhin ist ein Laminat bekannt, das im wesentlichen aus (1) einem geschäumten Harzmaterial, z.B. Polystyrol, (2) einem festen, thermoplastischen Verstärkungsmaterial, z.B. Polyethylen, und einer Metallschicht, z.B. aus Aluminium, zusammengesetzt ist. Dieses Laminat dient zur Herstellung von Konstruktionselementen wie Wandverkleidungen, Dachverkleidungen und Schwimmtafeln (vgl. US-Patentschrift 3 467 569) und weist dementsprechend steife Kunststoffschichten mit grossen E-Moduli auf.

Schliesslich ist noch ein flexibler, fliesen- oder bahnförmiger Isolierbelag beschrieben, der auf Decken, Wänden und Böden, hinter Heizungen, auf Stellwänden, auf Raumteilern, in Räumen, Fahrzeugen oder Behältern aufgebracht werden soll und zur Wärme- und Schallisolierung dient (vgl. französische Offenlegungsschrift 2 303 136 = deutsche Gebrauchsmusterschrift 7 507 196). Dieser Isolierbelag besteht im wesentlichen aus einer Weichschaumschicht, die oberseitig mit einer Trägerschicht, in der Kunststoff-Fasern verankert sind, und unterseitig mit einem Kaschierbelag verbunden ist; der Kaschierbelag kann eine selbstklebende Beschichtung tragen, die mit einer abziehbaren Deckschicht abgedeckt ist.

Aufgabe der Erfindung ist die Schaffung einer Verbundplatte mit schalldämpfenden Eigenschaften, die wirtschaftlich herstellbar ist und in einfacher Weise auf lärmerzeugenden Metallflächen fixiert werden kann.

Die Erfindung betrifft eine Verbundplatte, bestehend aus einer höchstens 5 mm starken schalldämpfenden Schicht (1) aus einem thermoplastischen Kunststoff, die auf der einen Seite mit einer höchstens 15 mm starken, zahlreiche Hohlräume aufweisenden Schicht (2) aus organischem Material und auf der anderen Seite mit einer höchstens 0,5 mm starken Metallfolie (3) verbunden ist, als Mittel zur Entdröhnung von Metallkonstruktionen, wobei die Schicht (1) aus einem thermoplastischen Kunststoff einen E-Modul von 10 bis 10 000, vorzugsweise von 100 bis 1000 N/cm² aufweist.

Die erfindungsgemässe Verbundplatte wird dadurch hergestellt, dass eine höchstens 0,5 mm starke Metallfolie einseitig mit einer höchstens 5 mm starken Schicht aus einem thermoplastischen Kunststoff beschichtet und die Kunststoffschicht dann mit einer höchstens 15 mm starken, zahlreiche Hohlräume aufweisenden Schicht aus organischem Material verbunden wird. Die Hohlraumschicht der so erhaltenen dreischichtigen Verbundplatte wird gegebenenfalls noch mit einer Klebstoffschicht versehen, die mit einer Trennfolie bedeckt wird, so dass eine fünfschichtige Verbundplatte resultiert.

Die Verbundplatte besteht aus mindestens drei Schichten, nämlich aus einer schalldämpfenden Kunststoffschicht, die einerseits mit einer Hohlraumschicht und andererseits mit einer Metallfolie verbunden ist. Die Stärke der Kunststoffschicht beträgt höchstens 5 mm, vorzugsweise 0,1 bis 2 mm; die Hohlraumschicht hat eine Stärke von höchstens 15 mm, vorzugsweise 1 bis 7 mm, und die Metallfolie liegt vor in einer Stärke von höchstens 0,5 mm, vorzugsweise 0,05 bis 0,2 mm.

Als Material für die Schicht (1) eignen sich alle thermoplastischen Kunststoffe mit viskoelastischen und schalldämpfenden Eigenschaften. Der E-Modul dieser Kunststoffe liegt im Bereich von 10 bis 10 000 N/cm², vorzugsweise 100 bis 1000 N/cm².

Besonders geeignete Kunststoffe sind Copolymere auf Basis eines Vinylesters mit vorzugsweise 4, 5 oder 6 Kohlenstoffatomen sowie Copolymere eines Acrylsäureesters mit 7 bis 10 Kohlenstoffatomen. Als Vinylester sind Vinylacetat und Vinylpropionat bevorzugt, während Acrylsäurebutylester und Acrylsäure-(2-ethylhexyl)-ester bevorzugte Acrylsäureester sind. Als Comonomere kommen vor allem in Frage (a) ungesättigte Kohlenwasserstoffe, (b) Ester der Methacrylsäure mit niederen Alkoholen, die vorzugsweise 1 bis 4 Kohlenstoffatome aufweisen, (c) Diester der Malein- oder Fumarsäure mit Alkoholen, die vorzugsweise 3 bis 6 Kohlenstoffatome aufweisen, (d) Acrylsäureamid oder Methacrylsäureamid, (e) Acrylnitril oder Methacrylnitril und (f) ungesättigte Monocarbonsäuren mit vorzugsweise 3 oder 4 Kohlenstoffatomen.

Besonders geeignete Comonomere aus der Gruppe (a) sind Ethylen, Styrol und Butadien, aus der Gruppe (b) Methylmethacrylat und Ethylmethacrylat, aus der Gruppe (c) Dibutylmaleinat und Dibutylfumarat und aus der Gruppe (f) Acrylsäure, Methacrylsäure, Crotonsäure und Vinylsulfonsäure. Die Comonomeren können einzeln oder zu mehreren eingesetzt werden. Vorteilhaft ist der Einsatz von ternären oder quaternären Copolymeren aus einem Vinylester, einem Acrylsäureester und ein oder zwei der vorgenannten Comonomeren. Der Gesamtanteil der Comonomeren beträgt höchstens 50 Gewichtsprozent, vorzugsweise 5 bis 30 Gewichtsprozent.

Die Hohlraumschicht (2) ist eine Schicht aus organischem Material, die zahlreiche Hohlräume aufweist, welche gleichmässig in der Schicht verteilt sind. Diese Hohlraumschicht ist vorzugsweise eine Schaumstoffschicht oder eine gekammerte Mehrschichtplatte. Die Hohlraumschicht ist ein wesentlicher Bestandteil der erfindungsgemässen Verbundplatte, da die Scherkomponente der zu dämpfenden Biegeschwingung hierdurch verstärkt auf die Schicht (1) übertragen wird. Dadurch wird eine erhebliche Verbesserung der Schalldämpfung im Vergleich zu Verbundsystemen ohne eine Mehrschichtplatte erreicht.

Die Schaumstoffschicht besteht aus organischem Material mit elastischen Eigenschaften, vorzugsweise einem synthetischen Polymer. Der E-Modul dieses Materials liegt im Bereich von 1000 bis 10 000 N/cm², vorzugsweise 5000 bis 9000 N/cm². Geeignete Schaumstoffe sind beispielsweise Polystyrolschaum und Polyurethanschaum. Der Schaumstoff ist offenporig oder vorzugsweise geschlossenporig.

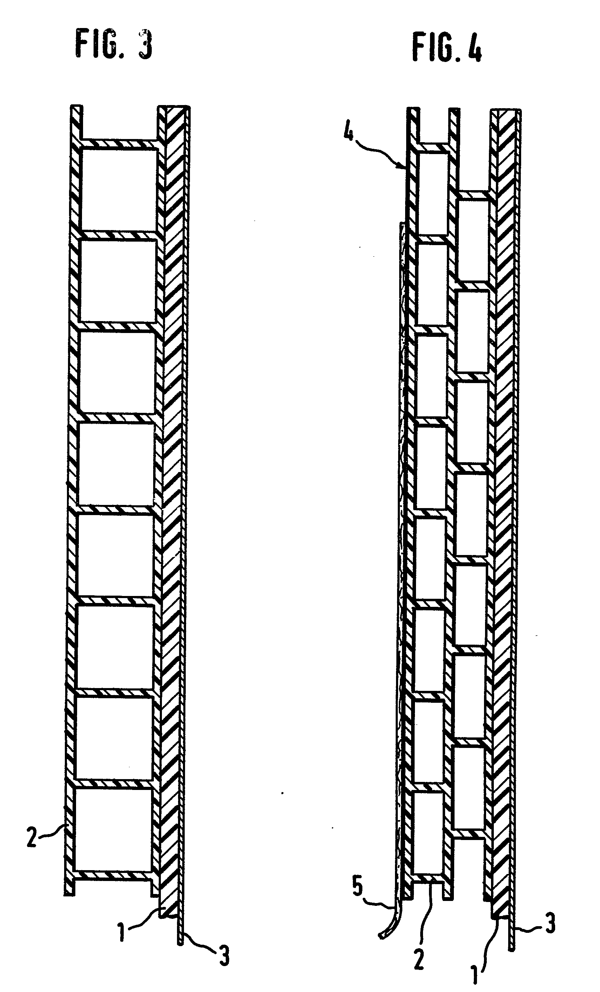

Die gekammerte Mehrschichtplatte besteht aus einem thermoplastischen Kunststoff mit elastischen Eigenschaften, vorzugsweise einem Polyolefin, und wird üblicherweise durch Extrusion hergestellt. Die Kammerbreite, d.h. der Abstand der Stege, liegt im Bereich von 2 bis 20 mm, vorzugsweise 3 bis 7 mm. Der E-Modul des thermoplastischen Kunststoffs liegt im Bereich von 20 000 bis 350 000 N/cm², vorzugsweise 80 000 bis 150 000 N/cm². Geeignete Kunststoffe sind insbesondere Polyethylen und Polypropylen, vorzugsweise mit einem mittleren Molekulargewicht (Zahlenmittel) von 10 000 bis 60 000. Die gekammerte Mehrschichtplatte ist vorzugsweise eine gekammerte Doppelschichtplatte (Stegdoppelplatte), d.h. eine aus zwei durch Stege miteinander verbundenen Schichten bestehende Platte (vgl. Figur 3) oder eine gekammerte Dreischichtplatte (vgl. Figur 4).

Die Metallfolie (3) dient als äussere Abschlussschicht für die erfindungsgemässe Verbundplatte. Sie besteht aus einem Metall, das einen E-Modul von mindestens 70 000 N/mm² und vorzugsweise von 100 000 bis 500 000 N/mm² aufweist. Geeignete Metalle sind Kupfer, Zink, Nickel sowie vorzugsweise Stahl und Aluminium; auch Legierungen der genannten Metalle untereinander oder mit anderen Metallen sind anwendbar, z.B. Messing.

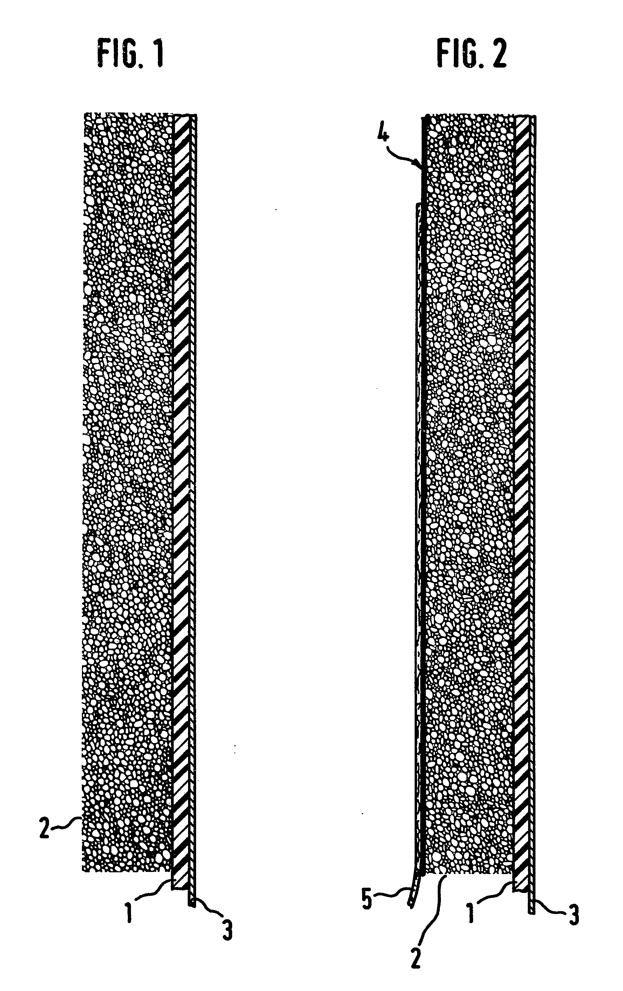

Die bevorzugte Ausführungsform der erfindungsgemässen Verbundplatte besteht aus fünf Schichten, nämlich der schalldämpfenden Schicht (1), der Hohlraumschicht (2), der Metallfolie (3), der Klebstoffschicht (4) und der Trennfolie (5) (vgl. Figur 2).

Die Klebstoffschicht (4) wird vorzugsweise aus einem Kunstharzklebstoff gebildet. Der Kunstharzklebstoff ist vorzugsweise ein Haftkleber. Als Grundlage für den Klebstoff eignen sich insbesondere Polyvinylacetat, Vinylacetat-Copolymere sowie Polyvinylacetale, Polyvinylalkohole, Polyacrylsäureester, Polymethacrylsäureester, Phenol-Formaldehyd-Harze und Epoxidharze.

Die Trennfolie (5) dient zur Abdeckung und zum Schutz der Klebstoffschicht (4); nach Abziehen der Trennfolie ist die Verbundplatte sofort gebrauchsfertig. Die Trennfolie besteht üblicherweise aus Papier, das vorzugsweise silikonisiert ist, oder aus einem nicht-polaren Polymer, vorzugsweise einem Polyolefin wie Polyethylen.

Zur Herstellung der erfindungsgemässen dreischichtigen Verbundplatte wird zunächst die Metallfolie einseitig mit dem thermoplastischen Kunststoff beschichtet. Die Beschichtung erfolgt in üblicher Weise durch Aufbringen einer Kunststoff-Schmelze oder -Lösung. Das gegebenenfalls verwendete Lösungsmittel ist vorzugsweise ein organisches Lösungsmittel mit einem Siedepunkt von höchstens 90 °C. Je nach Art des Kunststoffs ist insbesondere ein Alkohol, Chlorkohlenwasserstoff, Keton, Ether oder Ester anwendbar, z.B. Dichlormethan, Ethylmethylketon, Essigsäuremethylester und Essigsäureethylester. Das Lösungsmittel wird nach dem Auftragen der Lösung wieder entfernt, vorzugsweise durch Trocknen der beschichteten Metallfolie bei einer Temperatur von 50 bis 100 °C. Die beschichtete Metallfolie wird dann bei einer Temperatur von 15 bis 30 °C auf der beschichteten Seite mit einer Hohlräume aufweisenden Folie zusammengeführt, vorzugsweise mit Hilfe eines Walzenpaares; dabei ist eine Walze vorzugsweise als Druckwalze ausgebildet.

Die so erhaltene dreischichtige Verbundplatte kann anschliessend mit einer Klebstoffschicht versehen werden, die vorzugsweise mif Hilfe einer Walze auf die Hohlraumschicht aufgetragen wird. Nach Trocknung wird die Klebstoffschicht dann mit einer Trennfolie abgedeckt; diese wird üblicherweise mit Hilfe von zwei Walzen, von denen eine vorzugsweise eine Druckwalze ist, auf den mit Klebstoff versehenen Verbund aufgebracht.

Die erfindungsgemässe Verbundplatte findet Anwendung als Mittel zum Entdröhnen von Metallkonstruktionen, insbesondere von flächenhaften Konstruktionsteilen an Automobilen, Flugzeugen und Schiffen, die vor allem durch Biegeschwingungen Störschall verursachen. Sie hat den Vorteil, dass sie auf sehr einfache Weise auch nachträglich auf bereits vorhandene Metallflächen, d.h. Bleche aller Art, aufgebracht werden kann.

Die Erfindung wird durch die nachstehenden Beispiele näher erläutert. Prozentangaben beziehen sich dabei jeweils auf das Gewicht.

Die Zeichnungen verdeutlichen die Erfindung. Figur 1 zeigt eine Verbundplatte, die aus drei Schichten aufgebaut ist, nämlich einer schalldämpfenden Schicht (1), einer Schaumstoffschicht (2) und einer Metallfolie (3). Figur 2 stellt eine besondere Ausgestaltung der erfindungsgemässen Verbundplatte dar, die hier aus fünf Schichten aufgebaut ist, nämlich einer schalldämpfenden Schicht (1), einer Schaumstoffschicht (2), einer Metallfolie (3), einer Klebstoffschicht (4) und einer Trennfolie (5). Figur 3 entspricht Figur 1 mit der Abweichung, dass (2) eine gekammerte Doppelschichtplatte darstellt. Figur 4 entspricht Figur 2 mit der Abweichung, dass (2) eine gekammerte Dreischichtplatte bedeutet.

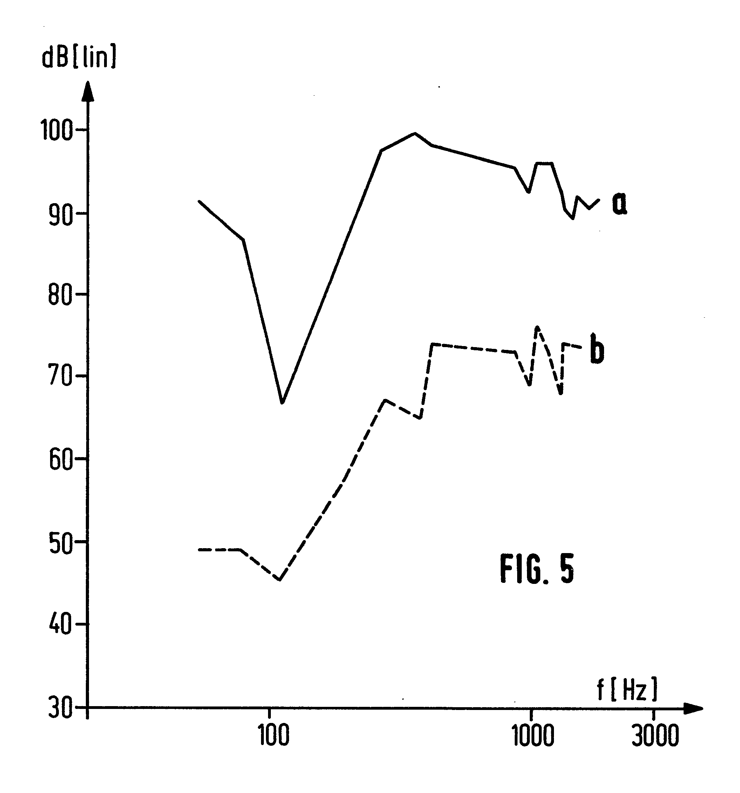

Der durch die Erfindung erreichte Vorteil ist aus Figur 5 ersichtlich: Kurve a gibt den Schallpegel wieder, der von einem zu Schwingungen angeregten Stahltisch erzeugt wird, und Kurve b zeigt den Schallpegel, der von dem gleichen zu Schwingungen angeregten Stahltisch erzeugt wird, nachdem eine erfindungsgemässe Verbundplatte auf seine obere Platte geklebt worden ist.

Beispiel 1

Eine 40-prozentige Lösung eines handelsüblichen Copolymers aus Vinylacetat und Dibutylmaleinat in Essigsäureethylester wird mit Hilfe einer Giessmaschine auf eine 0,1 mm starke Folie aus Stahl gegossen. Die nach der Trocknung bei einer Temperatur von 70 °C resultierende Kunststoffschicht hat eine Stärke von 0,3 mm. Die beschichtete Stahlfolie wird zwischen zwei Walzen, von denen eine als Druckwalze ausgebildet ist, auf der beschichteten Seite mit einer 3 mm starken Folie aus Polystyrolschaum zusammengeführt und durch Andrücken verbunden.

Beispiel 2

Ein Copolymer aus 83% Acrylsäureestern, 10% Methacrylsäuremethylester, 6% Arcylamid und 1% Acrylsäure, das eine Schmelzviskosität von 45 Pa·s (gemessen bei 180 °C) aufweist, wird durch Erwärmen auf eine Temperatur von 130 °C geschmolzen. Die Schmelze wird mit Hilfe einer Giessmaschine auf eine 0,2 mm starke Aluminiumfolie gegossen, und die so beschichtete Aluminiumfolie wird durch Anblasen mit Raumluft auf Raumtemperatur gekühlt. Die resultierende Kunststoffschicht hat eine Stärke von 0,7 mm. Die beschichtete Aluminiumfolie wird zwischen zwei Walzen, von denen eine als Druckwalze ausgebildet ist, auf der beschichteten Seite mit einer 5 mm starken Folie aus Polystyrolschaum zusammengeführt und durch Andrücken verbunden.

Auf der freien Seite der Schaumfolie wird dann ein handelsüblicher Haftkleber auf Basis eines Polyacrylsäureesters mit Hilfe einer Walze aufgetragen, und der Kleber wird durch Anblasen mit Raumluft getrocknet. Danach wird der mit der Klebstoffschicht versehene Verbund zwischen zwei Walzen, von denen eine als Druckwalze ausgebildet ist, mit silikonisiertem Papier zusammengeführt und durch Andrücken verbunden.

Beispiel 3

Eine 40prozentige Lösung eines handelsüblichen Copolymers aus Vinylacetat und Dibutylmaleinat in Essigsäureethylester wird mit Hilfe einer Giessmaschine auf eine 0,1 mm starke Aluminiumfolie gegossen. Die nach der Trocknung bei einer Temperatur von 70 °C resultierende Kunststoffschicht hat eine Stärke von 0,3 mm. Die so beschichtete Aluminiumfolie wird zwischen zwei Walzen, von denen eine als Druckwalze ausgebildet ist, auf der beschichteten Seite mit einer 3,3 mm starken Folie aus Polystyrolschaum zusammengeführt und durch Andrücken verbunden.

Beispiel 4

Eine 40-prozentige Lösung eines handelsüblichen Copolymers aus Vinylacetat und Dibutylmaleinat in Essigsäureethylester wird mit Hilfe einer Giessmaschine auf eine 0,1 mm starke Folie aus Stahl gegossen. Die nach der Trocknung bei einer Temperatur von 70 °C resultierende Kunststoffschicht hat eine Stärke von 0,3 mm. Die beschichtete Stahlfolie wird zwischen zwei Walzen, von denen eine als Druckwalze ausgebildet ist, auf der beschichteten Seite mit einer 3 mm starken gekammerten Doppelschichtplatte mit einer Kammerbreite von 3 mm aus Polypropylen (Molekulargewicht 50 000) zusammengeführt und durch Andrücken verbunden.

Beispiel 5

Ein Copolymer aus 83% Acrylsäureestern, 10% Methacrylsäuremethylester, 6% Acrylamid und 1% Acrylsäure, das eine Schmelzviskosität von 45 Pa·s (gemessen bei 180 °C) aufweist, wird durch Erwärmen auf eine Temperatur von 130 °C geschmolzen. Die Schmelze wird mit Hilfe einer Giessmaschine auf eine 0,2 mm starke Aluminiumfolie gegossen, und die so beschichtete Aluminiumfolie wird durch Anblasen mit Raumluft auf Raumtemperatur gekühlt. Die resultierende Kunststoffschicht hat eine Stärke von 0,5 mm. Die beschichtete Aluminiumfolie wird zwischen zwei Walzen, von denen eine als Druckwalze ausgebildet ist, auf der beschichteten Seite mit einer 4 mm starken gekammerten Doppelschichtplatte mit einer Kammerbreite von 4 mm aus Polypropylen (Molekulargewicht 50 000) zusammengeführt und durch Andrücken verbunden.

Auf der freien Seite der Doppelschichtplatte wird dann ein handelsüblicher Haftkleber auf Basis eines Polyacrylsäureesters mit Hilfe einer Walze aufgetragen, und der Kleber wird durch Anblasen mit Raumluft getrocknet. Danach wird der mit der Klebstoffschicht versehene Verbund zwischen zwei Walzen, von denen eine als Druckwalze ausgebildet ist, mit silikonisiertem Papier zusammengeführt und durch Andrücken verbunden.

Anwendungsbeispiel

a) Ein rechteckiger (75 cm × 50 cm), 65 cm hoher Stahltisch, dessen Platte aus 3 mm starkem Stahlblech besteht und dessen vier Beine aus Winkeleisen (3 cm × 3 cm) mit einer Stärke von 4 mm bestehen, die in 25 cm Höhe durch ein 3 mm starkes Stahlblech miteinander verbunden sind und jeweils auf einem 45 mm hohen Gummistopfen stehen, wird in der Mitte der unteren Stahlplatte von unten mit Hilfe eines handelsüblichen Schwingerregers zu erzwungenen Schwingungen angeregt. Der Schwingtisch des Schwingerregers ist durch Abstandshalter auf einen Hub von 2 mm eingestellt. Über ein Mikrophon, das sich im Abstand von 40 cm vom Tisch in 45 cm Höhe über dem Boden befindet, wird der abgestrahlte Luftschall mit Hilfe eines handelsüblichen Impulsschallpegelmessers gemessen. Der in Abhängigkeit von der Frequenz ermittelte, linear bewertete Schallpegel ist aus Figur 5 ersichtlich (Kurve a).

b) Der vorstehend beschriebene Versuch wird wiederholt, nachdem auf die obere Platte des Tisches eine nach Beispiel 3 hergestellte Verbundplatte mit den Abmessungen 50 cm × 75 cm aufgeklebt worden ist. Der in Abhängigkeit von der Frequenz ermittelte, linear bewertete Schallpegel ist aus Figur 5 ersichtlich (Kurve b); der Schallpegel liegt hier durchschnittlich ca. 20 dB niedriger als bei Versuch a).

## Patentansprüche

1. Verbundplatte, bestehend aus einer höchstens 5 mm starken Schicht (1) aus einem thermoplastischen Kunststoff, die auf der einen Seite mit einer höchstens 15 mm starken, zahlreiche Hohlräume aufweisenden Schicht (2) aus organischem Material und auf der anderen Seite mit einer höchstens 0,5 mm starken Metallfolie (3) verbunden ist, wobei die Schicht (1) aus einem thermoplastischen Kunststoff besteht, der einen E-Modul von 10 bis 10 000 N/cm², vorzugsweise von 100 bis 1000 N/cm² aufweist, wodurch die Verbundplatte körperschalldämpfend wird.

2. Verbundplatte nach Anspruch 1, dadurch gekennzeichnet, dass der thermoplastische Kunststoff der Schicht (1) ein Vinylester-Copolymer oder ein Acrylsäureester-Copolymer ist.

## Claims

1. Laminate composite consisting of a layer (1) of at most 5 mm thickness made of a thermoplastic polymer, which layer (1) is connected at its one face to a layer (2) of organic material being at maximum of 15 mm thickness and having a plurality of cavities, and which layer (1) is connected at its other face to a metal film (3) being at maximum 0,5 mm thick, the layer (1) consisting of a thermoplastic polymer having a Young modulus of from 10 to 10 000 N/cm², preferably of from 100 to 1000 N/cm², whereby the laminate composite is rendered damping body borne noise.

2. Laminate composite according to claim 1 characterized in that the thermoplastic polymer of layer (1) is a vinyl ester copolymer or an acrylic acid ester polymer.

## Revendications

1. Panneau stratifié consistant en une couche (1), ayant une épaisseur de 5 mm au maximum, en une matière synthétique thermoplastique, qui est reliée ou collée d'un côté à une couche (2) ayant au maximum 15 mm d'épaisseur et présentant de nombreuses cavités, en une matière organique, et reliée ou collée de l'autre côté à une feuille de métal (3) ayant au maximum 0,5 mm d'épaisseur, la couche (1) consistant en une matière synthétique thermoplastique présentant un module E de 10 à 10 000 N/cm², avantageusement de 100 à 1000 N/cm², de sorte que le panneau stratifié amortit les bruits émanant d'un corps solide ou propagés par celui-ci.

2. Panneau stratifié selon la revendication 1, caractérisé en ce que la matière synthétique thermoplastique de la couche (1) est un copolymère d'un ester vinylique ou est un copolymère d'un ester de l'acide acrylique.

# FIG. 1

# FIG. 2

# FIG. 3

# FIG. 4

FIG. 5